# EUROPÄISCHE PATENTSCHRIFT

(11) **EP 0 462 128 B1**
(45) Veröffentlichungstag und Bekanntmachung des Hinweises auf die Patenterteilung: **21.04.1993**
(21) Anmeldenummer: 90903782.2
(22) Anmeldetag: 23.02.1990
(51) Int. Cl.: B65G 27/08, B65G 27/02, B65G 49/04

(54) **IN EINE FLÜSSIGKEIT EINTAUCHENDE VIBRATIONSFÖRDEREINRICHTUNG MIT DÄMPFUNG DER SCHWINGUNGSÜBERTRAGUNG**
JIGGING CONVEYOR IMMERSED IN A LIQUID WITH ATTENUATION OF THE TRANSMITTED VIBRATIONS
CONVOYEUR A VIBRATIONS IMMERGE A AMORTISSEMENT DES VIBRATIONS TRANSMISES

(30) Priorität: 06.03.1989 DE 3907147
(43) Veröffentlichungstag der Anmeldung: 27.12.1991
(73) Patentinhaber: SIEMENS AKTIENGESELLSCHAFT, 80333 München (DE)
(72) Erfinder: FISCHER, Jürgen, D-5060 Bergisch Gladbach 2 (DE); BIRKLE, Siegfried, D-8552 Höchstadt/Aisch (DE); ELSEL, Werner, D-8520 Erlangen (DE); GEHRING, Johann, D-8521 Spardorf (DE); MAURER, Arnolf, D-8521 Budenreuth (DE); NIPPE, Waldemar, D-8520 Erlangen (DE)
(86) Internationale Anmeldenummer: DE9000127
(87) Internationale Veröffentlichungsnummer: WO9010586

(56) Entgegenhaltungen:
- EP-A- 0 209 766
- BE-A- 525 480
- DE-A- 3 524 488
- DE-B- 1 130 649
- GB-A- 1 497 304
- US-A- 2 985 281

## Beschreibung

Die vorliegende Erfindung betrifft eine Vibrationsfördereinrichtung für Schüttgut (Kleinteile), die zumindest teilweise in eine einen Behälter zum Teil füllende Flüssigkeit taucht. Vibrationsfördereinrichtungen werden vielfach dazu verwendet, Schüttgut, z. B. körnige Stoffe oder auch sich ähnlich wie diese verhaltende Kleinteile, z. B. Schrauben und Muttern, von einem niedrigeren auf ein höheres Niveau zu fördern. Die bekannten Fördereinrichtungen dieser Art arbeiten in Luft, wobei eine Übertragung der Vibrationen auf die Fundamente gering ist.

Die Anmelderinnen sind bestrebt, Vibrationsfördereinrichtungen auch in galvanischen Anlagen einzusetzen, in denen Gegenstände der unterschiedlichsten Art, so auch Kleinteile mit einer vor Korrosion schützenden Aluminiumschicht versehen werden. Dazu müssen die Vibrationsfördereinrichtungen zumindest teilweise in den Elektrolyten oder in Reinigungsflüssigkeiten eintauchen. Eine derartige Vibrationsfördereinrichtung ist aus der EP-A-209 766 bekannt. Bei ihr ist eine Förderbahn an einer vibrierenden Zentralsäule befestigt, die, durch einen Faltenbalg abgedichtet, die Wand des Behälters durchdringt, wobei der Balg lediglich Dicht- aber keine Dämpfungsfunktion hat. Es hat sich gezeigt, daß die Schwingungen der Fördereinrichtung wegen der Inkompressibilität der Flüssigkeit in erheblichem Maße an den die Flüssigkeit enthaltenden Behälter und an die Fundamente weitergegeben werden. Bei kleineren Vibrationsfördereinrichtungen sind die beschriebenen Nachteile meist nicht bedeutsam. Beim Übergang von kleineren Vibrationsfördereinrichtungen, die in Versuchsanlagen eingesetzt wurden, zu solchen größerer Abmessung und höherer Leistung, wie sie in Produktionsanlagen benötigt werden, sind die übertragenen Kräfte so groß, daß eine Dämpfung erforderlich wurde.

Aufgabe der vorliegenden Erfindung ist eine Verbesserung der in einer Flüssigkeit angeordneten Vibrationsfördereinrichtungen dahingehend, daß die Übertragung der Schwingungen auf die ruhenden Teile der Anlage deutlich verringert wird.

Die Lösung dieser Aufgabe erfolgt dadurch, daß im Behälter unterhalb des Flüssigkeitsspiegels eine Kammer angeordnet ist, deren Volumen in Abhängigkeit von einem auf sie wirkenden, durch die Flüssigkeit ausgeübten Druck veränderbar ist. Die durch die Vibration des Förderers zum Mitschwingen angeregte Flüssigkeitssäule überträgt dann ihre Schwingungen nur stark gedämpft weiter, wenn die Übertragungskette ein genügend kompressibles Glied aufweist.

Die Ausgestaltung der Erfindung gemäß dem 2. Anspruch gestattet es, den Grad der Kompressibilität dieses Gliedes auf das besondere, der Berechnung nur beschränkt zugängliche und von einer Vielzahl von Faktoren abhängige Schwingungsverhalten des jeweiligen Förderers abzustimmen. Dies kann durch Verändern der dem kompressiblen Glied (wie weiter unten ausgeführt, einer Feder oder einem Gasvolumen) mitgeteilten Vorspannung geschehen.

Die Lehre des 3. Anspruchs verwirklicht die erste der angedeuteten Möglichkeiten, wobei im 4. Anspruch eine bevorzugte Realisierungsform angegeben ist.

Die so beschriebene Kammer kann evakuiert sein, so daß die geforderte Nachgiebigkeit und Elastizität durch die Kammerwand selbst aufgebracht werden muß. Es ist jedoch auch gemäß dem im 5. Anspruch gemachten Vorschlag möglich, diese Kammer mit einem Gas zu füllen, das seinerseits elastisch reagiert.

Die zweite der oben angesprochenen Möglichkeiten wird in wiederum zwei Ausführungsbeispielen im 6. bzw. 7. Anspruch angesprochen. Bei der ersteren Ausführungsform erfolgt die Dämpfung ausschließlich durch das Gas, während die Wandungen der (hier nach unten offenen) Kammer starr ausgeführt werden können. Bei der Konstruktion gemäß dem 6. Anspruch erfolgt die Dämpfung ebenfalls nur durch den gasgefüllten Raum, während dessen Umrandung (etwa aus einer Kunstoffolie) selbst nichts dazu beiträgt.

Der im 8. Anspruch gemachte Vorschlag zielt darauf ab, den in einer gasgefüllten Kammer im Ruhezustand der Fördervorrichtung herrschenden Druck variieren zu können, um die Dämpfungseigenschaften einmal wie oben angedeutet den für jede Anlage spezifischen Bedingungen anpassen zu können und andererseits dazu, die Dämpfung an die je nach zu förderndem Gut unterschiedlichen Betriebsweisen des Vibrationsförderers anzupassen.

Der 9. und 10. Anspruch bezeichnen bevorzugte Verwendungen der erfindungsgemäßen Einrichtung.

Ausführungsbeispiele der Erfindung sind schematisch in der Zeichnung dargestellt, und zwar im Längsaxialschnitt.

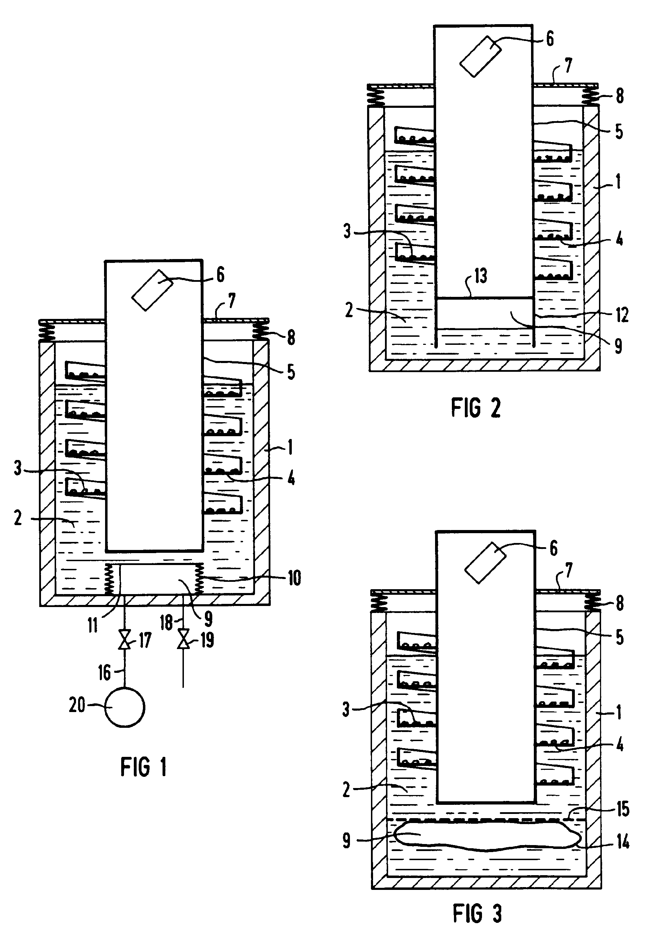

Allen Ausführungsbeispielen gemeinsam ist ein Behälter 1, der zum größten Teil mit einer Flüssigkeit 2 gefüllt ist, z. B. mit einem Galvanisierbad, in dem Kleinteile 3, z. B. Schrauben mit einem vor Rost schützenden Aluminiumüberzug versehen werden. In dem hier skizzierten Teil der Anlage werden die Kleinteile 3 aus der Flüssigkeit mit Hilfe eines Vibrationsförderers auf ein Niveau oberhalb derselben gebracht. Dazu befinden sie sich auf einer Förderbahn 4, die sich wendelförmig um einen Zentralzylinder 5 erstreckt, innerhalb dessen sich ein die Vibrationen erzeugender Unwuchtmotor 6 befindet, dessen Stromversorgung usw. hier der Übersichtlichkeit halber nicht dargestellt ist. Da galvanische Verfahren der beschriebenen Art unter Luftabschluß durchgeführt werden müssen, ist der Zentralzylinder 5 in einen Deckel 7 eingefügt, der den Behälter 1 abdeckt und mit diesem über einen elastischen, dichten Faltenbalg 8 verbunden ist. Beim Betrieb des Vibrationsförderers schwingt die Flüssigkeit 2 mit diesem mit und würde zu erheblichen Belastungen der Anlage, insbesondere der Behälterwand 1 und der direkt angekoppelten Teile führen, wenn nicht unterhalb des vibrierenden Zentralzylinders 5 ein nicht mit Flüssigkeit gefüllter Raum 9 angeordnet wäre. Dieser kann durch einen weiteren Faltenbalg 10 gebildet sein, der an seiner Oberseite mit einem Deckel 11 verschlossen ist (Figur 1). Der Raum 9 kann evakuiert sein, in welchem Falle der Faltenbalg 10 allein die Dämpfungsfunktion übernimmt, oder aber wie in den beiden anderen aufgezeigten Ausführungsbeispielen gasgefüllt. Der Behälter 1 kann auch (hier nicht dargestellt) im Bereich des Faltenbalges 10 eine Öffnung aufweisen, sodaß der Raum 9 mit der umgebenden Atmosphäre in Verbindung steht. Bei dem in der Figur 2 dargestellten Ausführungsbeispiel wird der Raum 9 durch eine mit dem Zentralzylinder 5 verbundene Schürze 12 und eine Trennwand 13 definiert. Es kann auch entsprechend der Ausführungsform der Figur 3 ein gasgefüllter Sack oder Ballon 14 verwendet werden, der durch eine Rückhaltevorrichtung 15, beispielsweise ein Gitter in seiner Lage unterhalb des Flüssigkeitspiegels festgehalten wird. Der Grad der Füllung der Räume 9 mit einem Gas (vorzugsweise einem Inertgas wie Stickstoff um Reaktionen mit der Flüssigkeit 2 zu vermeiden) kann verändert werden, wie in der Figur 1 dargestellt. Aus einem Behälter 20 kann über eine Leitung 16, die mittels eines Ventils 17 absperrbar ist Gas in den Raum 9 geleitet werden, um je nach Konstruktion und Betriebszustand (z. B. je nach Füllhöhe der Flüssigkeit 2 oder der Schwingungsamplitude des Zentralzylinders 5) die Elastizität des Gaspolsters zu erhöhen oder im entgegengesetzten Falle zu vermindern, indem das Gas über eine zweite Leitung 18, die mittels eines zweiten Ventils 19 absperrbar ist abzulassen. Eine ähnliche, hier nicht dargestellte Vorrichtung kann in dem Ausführungsbeispiel nach der Fig. 2 dazu verwendet werden, etwaige Gasverluste aus dem Raum 9 (hervorgerufen durch das Umgehen der Schürze 12 durch infolge der Vibrationen sich vom Gaspolster abspaltende Blasen) auszugleichen.

## Patentansprüche

1. Vibrationsfördereinrichtung für Schüttgut (Kleinteile) (3), die zumindest teilweise in eine einen Behälter (1) zum Teil füllende Flüssigkeit (2) taucht, **dadurch gekennzeichnet,** daß im Behälter (1) unterhalb des Flüssigkeitsspiegels (2) eine gegenüber der Umgebung verschlossene Kammer (9) angeordnet ist, deren volumen in Abhängigkeit von einem auf sie wirkenden, durch die Flüssigkeit ausgeübten Druck veränderbar ist.

2. Einrichtung nach Anspruch 1, **dadurch gekennzeichnet,** daß der Grad der veränderbarkeit des volumens der Kammer (9) bei einer gegebenen Änderung des durch die Flüssigkeit (2) übertragenen Drucks seinerseits variabel ist.

3. Einrichtung nach Anspruch 1 oder 2, **dadurch gekennzeichnet,** daß die Kammer (9) mit nachgiebigen Wänden (10) aus einem elastischen Werkstoff versehen ist.

4. Einrichtung nach Anspruch 3, **dadurch gekennzeichnet,** daß die Kammer (9) die Gestalt eines am Boden des Behälters (1) angeordneten, verschlossenen Faltenbalges (10) hat.

5. Einrichtung nach Anspruch 3 oder 4, **dadurch gekennzeichnet,** daß die Kammer (9) gasgefüllt ist.

6. Einrichtung nach Anspruch 1 oder 2, **dadurch gekennzeichnet,** daß die Kammer (9) die Gestalt einer in die Flüssigkeit (2) eintauchenden, gasgefüllten, einen Teil des eigentlichen vibrationsförderers (4 bis 7) bildenden Glocke (12) hat.

7. Einrichtung nach Anspruch 1 oder 2, **dadurch gekennzeichnet,** daß die Kammer (9) die Gestalt eines in die Flüssigkeit (2) eingetauchten, durch eine Rückhaltevorrichtung (15) am Aufsteigen gehinderten, gasgefüllten Ballons (14) hat.

8. Einrichtung nach einem oder mehreren der Ansprüche 2 bis 7, **dadurch gekennzeichnet,** daß die Kammer (9) an eine vorzugsweise durch ein Stellorgan (17) regelbare Gasversorgung (15) angeschlossen ist.

9. Verwendung einer Einrichtung nach einem oder mehreren der vorhergehenden Ansprüche zur Förderung von Schüttgut (3) aus und in einem Galvanisierbad (2).

10. Verwendung einer Einrichtung nach einem oder mehreren der Ansprüche 1 bis 8 zur Förderung von Schüttgut (3) aus und in einem Reinigungsbad (2).

## Claims

1. Vibrating conveying device for bulk material (small parts) (3) which dips at least in part into a fluid (2) which partly fills a container (1),
characterised in that arranged in the container (1) below the fluid level (2) there is a chamber (9) which is sealed in respect of the environment and the volume of which can be varied as a function of a pressure which acts on it and is exerted by the fluid.

2. Device according to claim 1, characterised in that the degree of variability of the volume of the chamber (9) is for its part variable with a given change of the pressure transmitted through the fluid (2).

3. Device according to claim 1 or 2,
characterised in that the chamber (9) is provided with flexible walls (10) made of an elastic material.

4. Device according to claim 3, characterised in that the chamber (9) has the shape of a sealed bellows (10) which is arranged at the base of the container (1).

5. Device according to claim 3 or 4,
characterised in that the chamber (9) is gas-filled.

6. Device according to claim 1 or 2,
characterised in that the chamber (9) has the shape of a bell (12) which dips into the fluid (2), is gasfilled and forms a portion of the actual vibrating conveyor (4 to 7).

7. Device according to claim 1 or 2,
characterised in that the chamber (9) has the shape of a gas-filled balloon (14) which is dipped into the fluid (2) and which is prevented from rising by a retaining arrangement (15).

8. Device according to one or several of the claims 2 to 7, characterised in that the chamber (9) is connected to a gas supply (15) which can be regulated preferably by means of a control unit (17).

9. Use of a device according to one or several of the preceding claims for conveying bulk material (3) out of and in a galvanizing bath (2).

10. Use of a device according to one or several of the claims 1 to 8 for conveying bulk material (3) out of and in a cleaning bath (2).

## Revendications

1. Convoyeur à vibrations pour des pièces en vrac (petites pièces) (3), qui est immergé au moins partiellement dans un liquide (2) remplissant partiellement un réservoir (1), caractérisé par le fait que dans le réservoir (1) est disposé, au-dessous du niveau (2) du liquide, une chambre (9) qui est fermée vis-à-vis de l'environnement et dont le volume peut être modifié en fonction d'une pression qui agit sur cette chambre et qui est exercée par le liquide.

2. Dispositif suivant la revendication 1, caractérisé par le fait que le degré de modification possible du volume de la chambre (9) est variable pour une modification donnée de la pression transmise de liquide (2), pour sa part.

3. Dispositif suivant la revendication 1 ou 2, caractérisé par le fait que la chambre (9) comporte des parois flexibles (10) réalisées en un matériau élastique.

4. Dispositif suivant la revendication 3, caractérisé par le fait que la chambre (9) possède la forme d'un soufflet fermé (10) monté sur le fond du réservoir (1).

5. Dispositif suivant la revendication 3 ou 4, caractérisé par le fait que la chambre (9) est remplie par un gaz.

6. Dispositif suivant la revendication 1 ou 2, caractérisé par le fait que la chambre (9) possédé la forme d'une cloche (12) remplie par un gaz, immergée dans le liquide (2) et constituant une partie du convoyeur à vibrations proprement dit (4 à 7).

7. Dispositif suivant la revendication 1 ou 2, caractérisé par le fait que la chambre (9) possède la forme d'un ballon (14) rempli par un gaz, immergé dans le liquide (2) et qui est empêchê de monter par un dispositif de retenue (15).

8. Dispositif suivant l'une ou plusieurs des revendications 2 à 7, caractérisé par le fait que la chambre (9) est raccordée à une alimentation en gaz (15) réglable de préférence au moyen d'un organe de réglage (17).

9. Utilisation du dispositif suivant l'une ou plusieurs des revendications précédentes pour l'entraînement de pièces en vrac (3) à partir de et dans un bain de galvanisation (2).

10. Utilisation d'un dispositif suivant une ou plusieurs des revendications 1 à 8 pour l'entraînement de pièces en vrac (3) à partir de et dans un bain de nettoyage (2).
